# EUROPÄISCHE PATENTSCHRIFT

(11) **EP 4 396 770 B1**
(45) Veröffentlichungstag und Bekanntmachung des Hinweises auf die Patenterteilung: **25.12.2024**
(21) Anmeldenummer: 22761054.0
(22) Anmeldetag: 21.07.2022
(51) Int. Cl.: G06T 7/00, G06V 10/98, G06V 20/56

(54) **VERFAHREN ZUR DETEKTION EINER OPTISCHEN BLOCKADE EINER KAMERA EINES FAHRZEUGS UND VERFAHREN ZUM BETRIEB EINES FAHRZEUGS**
METHOD FOR DETECTING OPTICAL BLOCKAGE OF A CAMERA OF A VEHICLE AND METHOD FOR OPERATING A VEHICLE
PROCÉDÉ POUR DÉTECTER UN BLOCAGE OPTIQUE D'UNE CAMÉRA D'UN VÉHICULE ET PROCÉDÉ POUR FAIRE FONCTIONNER UN VÉHICULE

(30) Priorität: 31.08.2021 DE 102021004414
(43) Veröffentlichungstag der Anmeldung: 10.07.2024
(73) Patentinhaber: Mercedes-Benz Group AG, 70372 Stuttgart (DE)
(72) Erfinder: KÖHLER, Malte Jonas, 71116 Gärtringen (DE); HÜMMER, Martin, 71065 Sindelfingen (DE); ZINKLER, Stephan, 70569 Stuttgart (DE)
(74) Vertreter: Novagraaf Group
(86) Internationale Anmeldenummer: PCT/EP2022/070558
(87) Internationale Veröffentlichungsnummer: WO 2023/030752

(56) Entgegenhaltungen:
- DE-A1- 102018 122 725

## Beschreibung

Die Erfindung betrifft ein Verfahren zur Detektion einer optischen Blockade einer Kamera eines Fahrzeugs und ein Verfahren zum Betrieb eines Fahrzeugs.

Aus der DE 10 2019 002 487 A1 ist ein Verfahren zur Überprüfung eines Umfelderfassungssensors eines Fahrzeugs bekannt. Dabei wird das Fahrzeug in einer digitalen Karte lokalisiert und in der digitalen Karte werden Merkmale von hinterlegten stationären Objekten einer Umgebung des Fahrzeugs identifiziert, von denen erwartet wird, dass sie vom Umfelderfassungssensor erkannt werden. Weiterhin wird eine Umgebung des Fahrzeugs mit dem Umfelderfassungssensor erfasst, wobei auf eine Degradation des Umfelderfassungssensors geschlossen wird, wenn erwartungsgemäß zu erkennende Merkmale nicht vom Umfelderfassungssensor erkannt werden oder wenn vom Umfelderfassungssensor tatsächlich erkannte Merkmale von den erwartungsgemäß zu erkennenden Merkmalen stark abweichen. Die digitale Karte wird mit den hinterlegten Merkmalen der stationären Objekte für einen vorgegebenen Vorausschauhorizont von einer fahrzeugexternen zentralen Speichereinheit abgerufen.

Aus der DE 10 2018 122 725 A1 ist ein Verfahren zur Detektion einer Blockade eines optischen Bildsensors eines Fahrzeugs bekannt, bei dem ein aufgenommenes Bild eines vorbestimmten Objekts mit einem Zielbild des vorbestimmten Objekts verglichen wird und ein Bildrauschen ermittelt wird und bei dem bei Überschreitung des Bildrauschens über eine zulässige Grenze hinaus wird eine Reinigung einer Linse des Bildsensors eingeleitet.

Der Erfindung liegt die Aufgabe zu Grunde, ein neuartiges Verfahren zur Detektion einer optischen Blockade einer Kamera eines Fahrzeugs und ein neuartiges Verfahren zum Betrieb eines Fahrzeugs anzugeben.

Die Aufgabe wird erfindungsgemäß gelöst durch ein Verfahren zur Detektion einer optischen Blockade einer Kamera eines Fahrzeugs, welches die im Anspruch 1 angegebenen Merkmale aufweist, und ein Verfahren zum Betrieb eines Fahrzeugs, welches die im Anspruch 10 angegebenen Merkmale aufweist.

Vorteilhafte Ausgestaltungen der Erfindung sind Gegenstand der Unteransprüche.

In einem Verfahren zur Detektion einer optischen Blockade einer Kamera eines Fahrzeugs gemäss Anspruch 1 wird erfindungsgemäß mit der Kamera ein Bild einer statischen Szene aus einer Umgebung des Fahrzeugs aufgenommen. Statische Szene bedeutet dabei insbesondere, dass keine dynamischen Objekte in der Szene vorhanden sind, somit insbesondere keine sich bewegenden oder zur Bewegung fähigen Objekte, insbesondere keine anderen Verkehrsteilnehmer wie beispielsweise andere Fahrzeuge oder Fußgänger. Zudem werden während der Aufnahme des Bildes vorliegende Aufnahmebedingungen ermittelt. Das aufgenommene Bild wird mit einem Referenzbild verglichen, d. h. mit einem Bild, das bei Aufnahme der statischen Szene mittels der Kamera zu erwarten ist. Dieses Referenzbild wird von einem fahrzeugexternen Server abgerufen. Es basiert auf Aufnahmen, die von einer Mehrzahl von Fahrzeugen von der gleichen statischen Szene unter gleichen oder ähnlichen Aufnahmebedingungen aufgenommen worden sind. Unter ähnlichen Aufnahmebedingungen sind dabei insbesondere Aufnahmebedingungen zu verstehen, die von den während der Aufnahme des Bildes vorliegenden Aufnahmebedingungen nur innerhalb vorgegebener Grenzwerte abweichen. Werden Abweichungen von Bildmerkmalen zwischen dem aufgenommenen Bild und dem Referenzbild festgestellt und überschreiten diese Abweichungen ein vorgegebenes Toleranzmaß, dann werden diese Abweichungen als Indiz für die optische Blockade der Kamera gewertet.

Für kamerabasierte Assistenzsysteme des Fahrzeugs ist diese Erkennung einer optischen Blockade der Kamera, beispielsweise durch Schmutz, essentiell.

Bildverarbeitende Algorithmen haben hierbei allerdings in einigen Umgebungsbedingungen Probleme, dies robust zu erkennen. Dies kann sowohl zu einer reduzierten Systemverfügbarkeit führen, insbesondere im Falle einer fälschlicherweise erkannten und tatsächlich nicht vorliegenden optischen Blockade, als auch zu einem kritischen Systemverhalten durch beispielsweise nicht erkannte andere Verkehrsteilnehmer führen, insbesondere im Falle einer fälschlicherweise nicht erkannten, tatsächlich jedoch vorliegenden, optischen Blockade. Das erfindungsgemäße Verfahren löst dieses Problem, da es eine verbesserte und robustere Erkennung einer optischen Blockade der Kamera ermöglicht.

Als Aufnahmebedingungen werden beispielsweise ein Ort, eine Uhrzeit, eine Lichtsituation, Wetterinformationen, eine Orientierung des Fahrzeugs und/oder ein Sichtbereich der Kamera ermittelt. Dadurch kann mit hoher Sicherheit das passende Referenzbild ermittelt werden.

Als Bildmerkmale werden beispielsweise eine Helligkeit, eine Anzahl erkannter Kanten, eine Schärfe der erkannten Kanten, eine Homogenität und/oder Farbinformationen berücksichtigt. Dadurch wird ein Vergleich des aufgenommenen Bildes mit dem Referenzbild anhand einer Vielzahl verschiedener Merkmale ermöglicht, um die möglicherweise bestehende optische Blockade der Kamera zuverlässig detektieren zu können.

Das Referenzbild basiert insbesondere auf gemittelten Bildinformationen der Aufnahmen, die von der Mehrzahl von Fahrzeugen von der gleichen statischen Szene unter den gleichen oder ähnlichen Aufnahmebedingungen aufgenommen worden sind. Dies beruht auf der Erkenntnis, dass eine optische Blockade der Kameras von Fahrzeugen, beispielsweise in Form von Verschmutzungen, ein nur vereinzelt auftretendes Phänomen ist. Wird ein Bildinhalt, insbesondere an einer vorgegebenen Stelle eines speziellen Szenarios, über mehrere Aufnahmen zu unterschiedlichen Zeiten, d. h. an unterschiedlichen Tagen, aber vorteilhafterweise zur jeweils gleichen Uhrzeit, mit gleichen Aufnahmebedingungen gemittelt, dann mitteln sich vereinzelt auftretende optische Blockadesituationen heraus. Auf diese Weise wird ein zuverlässiges Referenzbild für den Vergleich mit dem jeweils aktuell aufgenommenen Bild erzeugt.

Beispielsweise werden als Bildmerkmale die Helligkeit im gesamten Bild und im gesamten Referenzbild und/oder die Helligkeit in einzelnen Bildregionen des Bildes und des Referenzbildes und/oder die Anzahl der erkannten Kanten im gesamten Bild und im gesamten Referenzbild und/oder die Anzahl der erkannten Kanten in einzelnen Bildregionen des Bildes und des Referenzbildes und/oder die Schärfe der erkannten Kanten im gesamten Bild und im gesamten Referenzbild und/oder die Schärfe der erkannten Kanten in einzelnen Bildregionen des Bildes und des Referenzbildes und/oder die Homogenität in einzelnen Bildregionen des Bildes und des Referenzbildes und/oder gemittelte Farbinformationen über einzelne Bildbereiche des Bildes und des Referenzbildes berücksichtigt. Die Bildbereiche können dabei gleich oder unterschiedlich zu den Bildregionen sein. Dadurch wird ein zuverlässiger Vergleich des aufgenommenen Bildes mit dem Referenzbild ermöglicht, um die möglicherweise bestehende optische Blockade der Kamera zuverlässig detektieren zu können.

Beispielsweise wird eine das vorgegebene Toleranzmaß überschreitende geringere Anzahl erkannter Kanten in einzelnen Bildbereichen des Bildes im Vergleich zur Anzahl erkannter Kanten in den entsprechenden Bildbereichen des Referenzbildes als Indiz für die optische Blockade der Kamera gewertet. Alternativ oder zusätzlich wird beispielsweise eine das vorgegebene Toleranzmaß überschreitende größere Homogenität des gesamten Bildes im Vergleich zur Homogenität des gesamten Referenzbildes als Indiz für die optische Blockade der Kamera gewertet. Alternativ oder zusätzlich kann dies auf entsprechende Weise auch mit den anderen oben genannten Merkmalen durchgeführt werden.

In einer möglichen Ausführungsform wird das aufgenommene Bild an den fahrzeugexternen Server übermittelt und zu den Aufnahmen, die von der Mehrzahl von Fahrzeugen von der gleichen statischen Szene unter gleichen oder ähnlichen Aufnahmebedingungen aufgenommen worden sind, hinzugefügt. Dadurch wird die Anzahl der Aufnahmen, auf denen das Referenzbild basiert, vergrößert und somit insbesondere die Qualität und Zuverlässigkeit des Referenzbildes verbessert.

Bei einem vorliegenden Indiz für die optische Blockade der Kamera kann beispielsweise vorgesehen sein, dass anschließend zusätzlich ein alternatives Verfahren zur Detektion der optischen Blockade der Kamera des Fahrzeugs durchgeführt wird. Dieses alternative Verfahren ist insbesondere eine so genannte Online-Blockadeerkennung. Beispielsweise wird das alternative Verfahren mit den auf die oben beschriebene Weise ermittelten Ergebnissen bereits vorkonditioniert, insbesondere um dann in relevanten Bildbereichen eine potentielle optische Blockade genauer zu untersuchen. Es muss von diesem alternativen Verfahren somit nicht mehr ein Gesamtbild untersucht werden, sondern nur noch einer oder mehrere relevante Bildbereiche, in dem bzw. in denen ein Indiz für eine vorliegende optische Blockade der Kamera ermittelt wurde. Dies wird insbesondere dann durchgeführt, wenn nur eine vorgegeben geringe Abweichung der Bildmerkmale zwischen dem aufgenommenen Bild und dem Referenzbild vorliegt, d. h. insbesondere dann, wenn diese Abweichung vorgegebene Grenzwerte nicht überschreitet.

In einem erfindungsgemäßen Verfahren zum Betrieb des Fahrzeugs gemäss Anspruch 10, welches zur Durchführung eines automatisierten Fahrbetriebs, insbesondere eines hochautomatisierten oder autonomen Fahrbetriebs, ausgebildet ist, wird das oben beschriebene Verfahren zur Detektion einer optischen Blockade der Kamera des Fahrzeugs durchgeführt. Bei einem vorliegenden Indiz für eine optische Blockade wird ein Automatisierungsgrad des Fahrbetriebs reduziert oder eine Fahraufgabe zum Führen des Fahrzeugs wird an einen Fahrzeugführer des Fahrzeugs übergeben. Dies wird insbesondere dann durchgeführt, wenn eine zu große Abweichung der Bildmerkmale zwischen dem aufgenommenen Bild und dem Referenzbild vorliegt, d. h. insbesondere dann, wenn diese Abweichung vorgegebene Grenzwerte überschreitet, insbesondere bei einer großen und eindeutigen Abweichung, so dass eine zusätzliche Prüfung durch ein alternatives Verfahren zur Detektion der optischen Blockade der Kamera des Fahrzeugs nicht mehr erforderlich ist, da aus der vorliegenden Abweichung sicher oder mit einer hohen Wahrscheinlichkeit auf eine tatsächlich vorliegende optische Blockade der Kamera geschlossen werden kann.

Für eine Verfügbarkeit und Sicherheit beim automatisierten Fahren muss eine bestimmte Leistungsfähigkeit der Kamera zur Erfassung der Umgebung des Fahrzeugs, insbesondere hinsichtlich einer Sichtweite, Genauigkeit und Fehlerrate, sichergestellt werden, um einen zuverlässigen automatisierten Fahrbetrieb des Fahrzeugs sicherzustellen. Eine blockierte Kamera, insbesondere eine zu stark blockierte Kamera, erfüllt diese Anforderungen an die Leistungsfähigkeit jedoch nicht, woraus eine reduzierte Verfügbarkeit einer Fahrzeugfunktion und/oder ein unsicherer Systemzustand mit einer großen Unfallgefahr resultieren. Mittels des Verfahrens ist eine Überprüfung der Kamera möglich, so dass eine begrenzte Leistungsfähigkeit derselben zuverlässig erkannt wird und in Abhängigkeit der Leitungsfähigkeit der Automatisierungsgrad des automatisierten Fahrbetriebs angepasst werden kann oder die Fahraufgabe vollständig an den Fahrzeugführer übergeben werden kann. Somit kann stets ein sicherer Fahrbetrieb des Fahrzeugs realisiert werden. Das heißt, mittels des Verfahrens können somit potenziell gefährliche Situationen, beispielsweise keine oder eine zu späte Erfassung von dynamischen Objekten und stationären Objekten im Umfeld des Fahrzeugs, durch nicht erkannte Einbrüche der Leistungsfähigkeit der Kamera bei der Umfelderfassung vermieden werden. Das heißt, mittels des Verfahrens kann ein Fehlerfall aufgrund einer Blockade der Kamera des Fahrzeugs erkannt werden und es können daraufhin unterstützende Systemreaktionen eingeleitet werden, beispielsweise eine langsamere Fahrt bis hin zu einem Nothalt.

Bei fehlender Übernahme der Fahraufgabe durch den Fahrzeugführer ist beispielsweise vorgesehen, dass das Fahrzeug innerhalb eines vorgegebenen Zeitraums zum Stillstand gebracht wird oder innerhalb eines vorgegebenen Zeitraums zunächst zu einem Fahrbahnrand oder einem Seitenstreifen geführt und anschließend zum Stillstand gebracht wird. Dies erhöht die Sicherheit des Fahrzeugs, innerhalb desselben befindlicher Insassen und anderer Verkehrsteilnehmer signifikant. Wird das Fahrzeug zunächst zum Fahrbahnrand oder Seitenstreifen geführt und erst anschließend zum Stillstand gebracht, wird insbesondere eine Kollisionsgefahr mit anderen Verkehrsteilnehmern weiter reduziert und dadurch die Sicherheit zusätzlich erhöht.

Ausführungsbeispiele der Erfindung werden im Folgenden anhand einer Zeichnung näher erläutert.

Dabei zeigt:

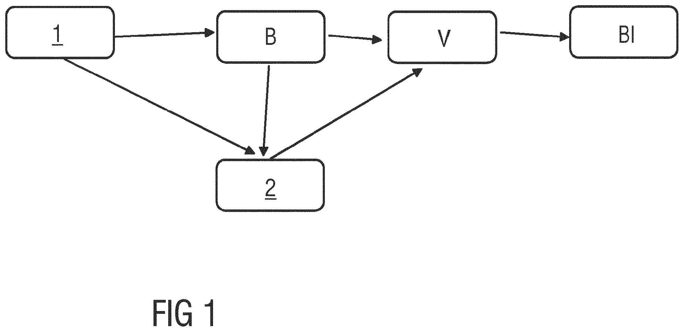

- Fig. 1: schematisch einen Ablauf eines Verfahrens zur Detektion einer optischen Blockade einer Kamera eines Fahrzeugs.

In der einzigen Figur 1 ist ein Ablauf eines möglichen Ausführungsbeispiels eines Verfahrens zur Detektion einer optischen Blockade einer Kamera eines Fahrzeugs 1 dargestellt.

In diesem Verfahren wird vom Fahrzeug 1 mittels seiner Kamera ein Bild B einer statischen Szene aus einer Umgebung des Fahrzeugs 1 aufgenommen. Statische Szene bedeutet dabei insbesondere, dass keine dynamischen Objekte in der Szene vorhanden sind.

Zudem werden vom Fahrzeug 1 während der Aufnahme des Bildes B vorliegende Aufnahmebedingungen ermittelt und, insbesondere als eine Szenariobeschreibung, an einen fahrzeugexternen Server 2 übermittelt. Das mittels der Kamera aufgenommene Bild B wird vorteilhafterweise ebenfalls an den fahrzeugexternen Server 2 übermittelt.

Vom fahrzeugexternen Server 2 wird durch das Fahrzeug 1, insbesondere entsprechend der Szenariobeschreibung, d. h. entsprechend der Aufnahmebedingungen, ein Referenzbild abgerufen und somit an das Fahrzeug 1 übermittelt. Das Referenzbild basiert auf Aufnahmen, die von einer Mehrzahl von Fahrzeugen von der gleichen statischen Szene unter gleichen oder ähnlichen Aufnahmebedingungen aufgenommen worden sind. Das Referenzbild basiert dabei insbesondere auf gemittelten Aufnahmen gleicher Szenarien, insbesondere auf gemittelten Bildinformationen der Aufnahmen, die von der Mehrzahl von Fahrzeugen von der gleichen statischen Szene unter den gleichen oder ähnlichen Aufnahmebedingungen aufgenommen worden sind.

Die Verbindung des Fahrzeugs 1 mit dem fahrzeugexternen Server 2 ist insbesondere eine Funkverbindung, insbesondere eine Mobilfunkverbindung, beispielsweise LTE.

In einem Vergleichsschritt V des Verfahrens wird das aufgenommene Bild B mit dem Referenzbild verglichen. Das Referenzbild stellt dabei das erwartete Bild dar, d. h. ein Bild, das bei Aufnahme der statischen Szene mittels der Kamera zu erwarten ist.

Werden Abweichungen von Bildmerkmalen zwischen dem aufgenommenen Bild B und dem Referenzbild festgestellt und überschreiten diese Abweichungen ein vorgegebenes Toleranzmaß, dann werden diese Abweichungen als Indiz für die optische Blockade der Kamera gewertet. Es wird dann eine entsprechende Blockadeinformation BI erzeugt, welche anschließend vom Fahrzeug 1, beispielsweise in dem hier beschriebenen Verfahren oder in einem anderen Verfahren, verwendet werden kann, wie im Folgenden noch beschrieben wird.

Im Folgenden wird ein möglicher Verfahrensablauf detailliert beschrieben.

Mittels des Verfahrens versucht das Fahrzeug 1 an einer spezifischen Position zu erkennen, ob die Kamera, insbesondere eine Kamerasensorik zur Erfassung der äußeren Umgebung des Fahrzeugs 1, aktuell durch eine optische Blockade beeinträchtigt ist. Das aktuelle Szenario, d. h. die aktuell vorliegende statische Szene, ist dabei insbesondere definiert durch die Aufnahmebedingungen.

Diese Aufnahmebedingungen umfassen beispielsweise einen aktuellen Ort des Fahrzeugs 1, insbesondere eine mittels eines globalen Navigationssattelitensystems ermittelte exakte Position des Fahrzeugs 1, eine aktuelle Orientierung des Fahrzeugs 1, einen aktuellen Sichtbereich der Kamera, eine aktuelle Uhrzeit, eine aktuell vorliegende Lichtsituation, beispielsweise ein Status eines Außenlichts des Fahrzeugs 1, eine Bewölkung und/oder Sonneneinstrahlung und/oder Informationen eines Lichtsensors des Fahrzeugs 1, aktuelle Wetterinformationen, beispielsweise ob Regen oder Schnellfall vorliegt oder ob es trocken ist, und natürlich die Information, dass keine dynamischen Objekte, insbesondere andere Verkehrsteilnehmer, beispielsweise andere Fahrzeuge oder Fußgänger, im Sichtbereich der Kamera vorhanden sind, denn nur dann liegt eine statische Szene vor. Die Aktualität dieser Informationen bezüglich der Aufnahmebedingungen bezieht sich dabei jeweils auf den Aufnahmezeitpunkt, zu dem das Bild B mittels der Kamera aufgenommen wird.

Aus dem fahrzeugexternen Server 2 und somit insbesondere aus einer darauf befindlichen Datenbank, auch als Online-Datenbank bezeichnet, wird das entsprechende Referenzbild zum Vergleich mit dem von der Kamera aufgenommenen Bild B abgerufen. Wie bereits erwähnt, basiert das Referenzbild insbesondere auf gemittelten Bildinformationen der Aufnahmen, die von der Mehrzahl von Fahrzeugen von der gleichen statischen Szene unter den gleichen oder ähnlichen Aufnahmebedingungen aufgenommen worden sind. Es basiert somit insbesondere auf gemittelten Bildinformationen aus den gleichen oder ähnlichen, insbesondere exakt gleichen, Szenarien wie die statische Szene des aufgenommenen Bildes B. Die Datenbank auf dem fahrzeugexternen Server 2 besteht hierfür vorteilhafterweise aus durch die Mehrzahl von Fahrzeugen hochgeladenen, d. h. an den fahrzeugexternen Server 2 übermittelten, Aufnahmen, welche insbesondere geclustert sind, d. h. insbesondere eingeteilt sind, nach unterschiedlichen Szenarien, d. h. nach den unterschiedlichen statischen Szenen und deren jeweiligen Aufnahmebedingungen.

Wie bereits erwähnt, wird vorteilhafterweise auch das aktuell vom Fahrzeug 1 aufgenommene Bild B an den fahrzeugexternen Server 2 übermittelt und dadurch in diese Datenbank aufgenommen, um dadurch die Basis für das jeweilige Referenzbild zu vergrößern. Dies erfolgt vorteilhafterweise erst, nachdem der Vergleich des aufgenommenen Bildes B mit dem Referenzbild durchgeführt wurde. Beispielsweise kann dadurch vermieden werden, unpassende Bilder B in die Datenbank aufzunehmen, insbesondere Bilder B, bei denen der Vergleich ein Indiz für die optische Blockade der Kamera ergeben hat oder zumindest Bilder B, bei denen der Vergleich ergeben hat, dass eine zu große und eindeutige Abweichung der Bildmerkmale zwischen dem aufgenommenen Bild B und dem Referenzbild vorliegt, die insbesondere vorgegebene Grenzwerte überschreitet, so dass sicher oder mit einer hohen Wahrscheinlichkeit auf eine tatsächlich vorliegende optische Blockade der Kamera geschlossen werden kann. Dadurch kann eine Zuverlässigkeit des Referenzbildes verbessert werden.

Der Vergleich des von der Kamera des Fahrzeugs 1 aufgenommenen Bildes B mit dem vom fahrzeugexternen Server 2 abgerufenen Referenzbild im Vergleichsschritt V des Verfahrens besteht insbesondere aus einer Auswertung der Bildmerkmale Helligkeit, Anzahl erkannter Kanten, Schärfe der erkannten Kanten, Homogenität und/oder Farbinformationen. Diese Bildmerkmale werden auch als Bildinformationen bezeichnet.

Beispielsweise besteht der Vergleich des von der Kamera des Fahrzeugs 1 aufgenommenen Bildes B mit dem vom fahrzeugexternen Server 2 abgerufenen Referenzbild im Vergleichsschritt V des Verfahrens aus der Auswertung der folgenden Bildmerkmale:
- die Helligkeit im gesamten Bild B und im gesamten Referenzbild und die Helligkeit in einzelnen Bildregionen des Bildes B und des Referenzbildes,
- die Anzahl und Schärfe der erkannten Kanten im gesamten Bild B und im gesamten Referenzbild und in einzelnen Bildregionen des Bildes B und des Referenzbildes,
- die Homogenität des Bildes B und des Referenzbildes in einzelnen Bildregionen,
- die gemittelte Farbinformationen über einzelne Bildbereiche des Bildes B und des Referenzbildes.

Aus dem beschriebenen Vergleich lässt sich eine robuste Aussage darüber treffen, ob das von der Kamera aktuell aufgenommene Bild B durch eine optische Blockade der Kamera beeinträchtigt ist. Wie beschrieben, werden Abweichungen der Bildmerkmale zwischen dem aufgenommenen Bild B und dem Referenzbild, wenn sie das vorgegebene Toleranzmaß überschreiten, als Indiz für die optische Blockade der Kamera gewertet.

Ist beispielsweise die Anzahl an erkannten Kanten in einzelnen Bildbereichen des Bildes B deutlich geringer als der gemittelte Wert aus der Datenbank, d. h. als die Anzahl der erkannten Kanten in den einzelnen Bildbereichen des Referenzbildes, deutet dies auf eine optische Blockade in diesen Bereichen hin.

Ist beispielsweise die Homogenität des gesamten Bildes B größer als der gemittelte Wert aus der Datenbank, d. h. als die Homogenität des gesamten Referenzbildes, deutet dies auf eine optische Blockade hin.

Somit wird beispielsweise eine das vorgegebene Toleranzmaß überschreitende geringere Anzahl erkannter Kanten in einzelnen Bildbereichen des Bildes B im Vergleich zur Anzahl erkannter Kanten in den entsprechenden Bildbereichen des Referenzbildes als Indiz für die optische Blockade der Kamera gewertet, und/oder es wird beispielsweise eine das vorgegebene Toleranzmaß überschreitende größere Homogenität des gesamten Bildes B im Vergleich zur Homogenität des gesamten Referenzbildes als Indiz für die optische Blockade der Kamera gewertet. Alternativ oder zusätzlich kann dies auf entsprechende Weise auch mit den anderen oben genannten Merkmalen durchgeführt werden.

Das Ergebnis des Vergleichsschritts V, d. h. die Blockadeinformation BI, insbesondere wenn diese das Indiz für die optische Blockade der Kamera enthält, wird beispielsweise dazu verwendet, anschließend zusätzlich ein alternatives Verfahren zur Detektion der optischen Blockade der Kamera des Fahrzeugs 1 durchzuführen, insbesondere eine Online-Blockadeerkennung, und diese insbesondere vorzukonditionieren, um in den relevanten Bildbereichen eine potentielle optische Blockade genauer zu untersuchen, insbesondere bei geringeren Abweichungen des Vergleichs des von der Kamera aufgenommenen Bildes B mit dem Referenzbild.

Alternativ wird das Ergebnis des Vergleichsschritts V, d. h. die Blockadeinformation BI, insbesondere, wenn diese das Indiz für die optische Blockade der Kamera enthält, beispielsweise dazu verwendet, direkt auf eine optische Blockadesituation zu schließen und entsprechende Assistenzsysteme des Fahrzeugs 1 abzuschalten, insbesondere bei großen, eindeutigen Abweichungen des Vergleichs des von der Kamera aufgenommenen Bildes B mit dem Referenzbild. Beispielsweise ist in einem Verfahren zum Betrieb des Fahrzeugs 1, welches zur Durchführung eines automatisierten Fahrbetriebs, insbesondere eines hochautomatisierten oder autonomen Fahrbetriebs, ausgebildet ist, vorgesehen, dass das oben beschriebene Verfahren zur Detektion einer optischen Blockade der Kamera des Fahrzeugs 1 durchgeführt wird, wobei bei einem vorliegenden Indiz für eine optische Blockade ein Automatisierungsgrad des Fahrbetriebs reduziert oder eine Fahraufgabe zum Führen des Fahrzeugs 1 an einen Fahrzeugführer des Fahrzeugs 1 übergeben wird. Dies wird insbesondere dann durchgeführt, wenn eine zu große Abweichung der Bildmerkmale zwischen dem aufgenommenen Bild B und dem Referenzbild vorliegt, d. h. insbesondere dann, wenn diese Abweichung vorgegebene Grenzwerte überschreitet, insbesondere bei einer großen und eindeutigen Abweichung, so dass eine zusätzliche Prüfung durch ein alternatives Verfahren zur Detektion der optischen Blockade der Kamera des Fahrzeugs 1 nicht mehr erforderlich ist, da aus der vorliegenden Abweichung sicher oder mit einer hohen Wahrscheinlichkeit auf eine tatsächlich vorliegende optische Blockade der Kamera geschlossen werden kann.

Bei fehlender Übernahme der Fahraufgabe durch den Fahrzeugführer ist beispielsweise vorgesehen, dass das Fahrzeug 1 innerhalb eines vorgegebenen Zeitraums zum Stillstand gebracht wird oder innerhalb eines vorgegebenen Zeitraums zunächst zu einem Fahrbahnrand oder einem Seitenstreifen geführt und anschließend zum Stillstand gebracht wird.

## Patentansprüche

1. Computer-implementiertes Verfahren zur Detektion einer optischen Blockade einer Kamera eines Fahrzeugs (1),
**dadurch gekennzeichnet, dass**
- mit der Kamera ein Bild (B) einer statischen Szene aus einer Umgebung des Fahrzeug (1) aufgenommen wird,
- während der Aufnahme des Bildes (B) vorliegende Aufnahmebedingungen ermittelt werden,
- das aufgenommene Bild (B) mit einem Referenzbild verglichen wird, das von einem fahrzeugexternen Server (2) abgerufen wird und auf Aufnahmen basiert, die von einer Mehrzahl von Fahrzeugen von der gleichen statischen Szene unter gleichen oder ähnlichen Aufnahmebedingungen aufgenommen worden sind,
- Abweichungen von Bildmerkmalen zwischen dem aufgenommenen Bild (B) und dem Referenzbild, wenn sie ein vorgegebenes Toleranzmaß überschreiten, als Indiz für die optische Blockade der Kamera gewertet werden.

2. Verfahren nach Anspruch 1,
**dadurch gekennzeichnet, dass** als Aufnahmebedingungen ein Ort, eine Uhrzeit, eine Lichtsituation, Wetterinformationen, eine Orientierung des Fahrzeugs (1) und/oder ein Sichtbereich der Kamera ermittelt werden.

3. Verfahren nach einem der vorhergehenden Ansprüche,
**dadurch gekennzeichnet, dass** als Bildmerkmale eine Helligkeit, eine Anzahl erkannter Kanten, eine Schärfe der erkannten Kanten, eine Homogenität und/oder Farbinformationen berücksichtigt werden.

4. Verfahren nach Anspruch 3,
**dadurch gekennzeichnet, dass** als Bildmerkmale berücksichtigt werden:
- die Helligkeit im gesamten Bild (B) und im gesamten Referenzbild und/oder die Helligkeit in einzelnen Bildregionen des Bildes (B) und des Referenzbildes,
- die Anzahl der erkannten Kanten im gesamten Bild (B) und im gesamten Referenzbild und/oder die Anzahl der erkannten Kanten in einzelnen Bildregionen des Bildes (B) und des Referenzbildes,
- die Schärfe der erkannten Kanten im gesamten Bild (B) und im gesamten Referenzbild und/oder die Schärfe der erkannten Kanten in einzelnen Bildregionen des Bildes (B) und des Referenzbildes,
- die Homogenität in einzelnen Bildregionen des Bildes (B) und des Referenzbildes, und/oder
- gemittelte Farbinformationen über einzelne Bildbereiche des Bildes (B) und des Referenzbildes.

5. Verfahren nach einem der vorhergehenden Ansprüche,
**dadurch gekennzeichnet, dass** das Referenzbild auf gemittelten Bildinformationen der Aufnahmen basiert, die von der Mehrzahl von Fahrzeugen von der gleichen statischen Szene unter den gleichen oder ähnlichen Aufnahmebedingungen aufgenommen worden sind.

6. Verfahren nach einem der Ansprüche 3 bis 5,
**dadurch gekennzeichnet, dass** eine das vorgegebene Toleranzmaß überschreitende geringere Anzahl erkannter Kanten in einzelnen Bildbereichen des Bildes (B) im Vergleich zur Anzahl erkannter Kanten in den entsprechenden Bildbereichen des Referenzbildes als Indiz für die optische Blockade der Kamera gewertet wird.

7. Verfahren nach einem der Ansprüche 3 bis 6,
**dadurch gekennzeichnet, dass** eine das vorgegebene Toleranzmaß überschreitende größere Homogenität des gesamten Bildes (B) im Vergleich zur Homogenität des gesamten Referenzbildes als Indiz für die optische Blockade der Kamera gewertet wird.

8. Verfahren nach einem der vorhergehenden Ansprüche,
**dadurch gekennzeichnet, dass** das aufgenommene Bild (B) an den fahrzeugexternen Server (2) übermittelt wird und zu den Aufnahmen, die von der Mehrzahl von Fahrzeugen von der gleichen statischen Szene unter gleichen oder ähnlichen Aufnahmebedingungen aufgenommen worden sind, hinzugefügt wird.

9. Verfahren nach einem der vorhergehenden Ansprüche,
**dadurch gekennzeichnet, dass** bei einem vorliegenden Indiz für die optische Blockade der Kamera anschließend zusätzlich ein alternatives Verfahren zur Detektion der optischen Blockade der Kamera des Fahrzeugs (1) durchgeführt wird.

10. Verfahren zum Betrieb eines Fahrzeugs (1), welches zur Durchführung eines automatisierten Fahrbetriebs ausgebildet ist, wobei ein Verfahren nach einem der vorhergehenden Ansprüche durchgeführt wird und bei einem vorliegenden Indiz für eine optische Blockade einer Kamera des Fahrzeugs (1) ein Automatisierungsgrad des Fahrbetriebs reduziert oder eine Fahraufgabe an einen Fahrzeugführer des Fahrzeugs (1) übergeben wird.

## Claims

1. Computer-implemented method for detecting an optical blockage of a camera of a vehicle (1),
**characterized in that**
- the camera is used to capture an image (B) of a static scene from an environment of the vehicle (1),
- capturing conditions present during the capturing of the image (B) are determined,
- the captured image (B) is compared with a reference image which is retrieved from a vehicle-external server (2) and is based on captures taken by a plurality of vehicles of the same static scene under the same or similar capturing conditions,
- deviations in image features between the captured image (B) and the reference image, if they exceed a specified tolerance level, are considered as an indication of the optical blockage of the camera.

2. Method according to claim 1,
**characterized in that** a location, a time, a lighting situation, weather information, an orientation of the vehicle (1) and/or a field of view of the camera are determined as capturing conditions.

3. Method according to any one of the preceding claims,
**characterized in that** a brightness, a number of detected edges, a sharpness of the detected edges, a homogeneity and/or color information are taken into account as image features.

4. Method according to claim 3,
**characterized in that** the following are taken into account as image features:
- the brightness in the entire image (B) and in the entire reference image and/or the brightness in individual image regions of the image (B) and the reference image,
- the number of detected edges in the entire image (B) and in the entire reference image and/or the number of detected edges in individual image regions of the image (B) and the reference image,
- the sharpness of the detected edges in the entire image (B) and in the entire reference image and/or the sharpness of the detected edges in individual image regions of the image (B) and the reference image,
- the homogeneity in individual image regions of the image (B) and the reference image, and/or
- averaged color information over individual image regions of the image (B) and the reference image.

5. Method according to any one of the preceding claims,
**characterized in that** the reference image is based on averaged image information of the captures taken by the plurality of vehicles of the same static scene under the same or similar capturing conditions.

6. Method according to any one of claims 3 to 5, **characterized in that** a lower number of detected edges in individual image regions of the image (B), which exceeds the specified tolerance level, compared to the number of detected edges in the corresponding image regions of the reference image is considered as an indication of the optical blockage of the camera.

7. Method according to any one of claims 3 to 6, **characterized in that** a greater homogeneity of the entire image (B), which exceeds the specified tolerance level, compared to the homogeneity of the entire reference image is considered as an indication of the optical blockage of the camera.

8. Method according to any one of the preceding claims,
**characterized in that** the captured image (B) is transmitted to the vehicle-external server (2) and is added to the captures taken by the plurality of vehicles of the same static scene under the same or similar capturing conditions.

9. Method according to any one of the preceding claims,
**characterized in that,** if there is an indication of the optical blockage of the camera, an alternative method for detecting the optical blockage of the camera of the vehicle (1) is subsequently carried out in addition.

10. Method for operating a vehicle (1) which is designed to carry out an automated driving operation, wherein a method according to any one of the preceding claims is carried out and, if there is an indication of an optical blockage of a camera of the vehicle (1), a degree of automation of the driving operation is reduced or a driving task is handed over to a driver of the vehicle (1).

## Revendications

1. Procédé implémenté par ordinateur pour la détection d'un blocage optique d'une caméra d'un véhicule (1),
**caractérisé en ce que**
- une image (B) d'une scène statique d'un environnement du véhicule (1) est prise avec la caméra,
- des conditions de prise présentes pendant la prise de l'image (B) sont déterminées,
- l'image (B) prise est comparée à une image de référence qui est récupérée à partir d'un serveur externe au véhicule (2) et est basée sur des prises qui ont été prises par une pluralité de véhicules à partir de la même scène statique dans des conditions de prise identiques ou similaires,
- des écarts de caractéristiques d'image entre l'image (B) prise et l'image de référence, s'ils dépassent une mesure de tolérance prédéfinie, sont interprétés comme un indice du blocage optique de la caméra.

2. Procédé selon la revendication 1,
**caractérisé en ce qu'**un lieu, une heure, une situation lumineuse, des informations météorologiques, une orientation du véhicule (1) et/ou une zone de vision de la caméra sont déterminés comme conditions de prise.

3. Procédé selon l'une des revendications précédentes,
**caractérisé en ce qu'**une luminosité, un nombre de bords décelés, une netteté des bords décelés, une homogénéité et/ou des informations de couleur sont pris en compte comme caractéristiques d'image.

4. Procédé selon la revendication 3,
**caractérisé en ce que** sont pris en compte comme caractéristiques d'image :
- la luminosité dans l'ensemble de l'image (B) et dans l'ensemble de l'image de référence et/ou la luminosité dans des régions d'image individuelles de l'image (B) et de l'image de référence,
- le nombre de bords décelés dans l'ensemble de l'image (B) et dans l'ensemble de l'image de référence et/ou le nombre de bords décelés dans des régions d'image individuelles de l'image (B) et de l'image de référence,
- la netteté des bords décelés dans l'ensemble de l'image (B) et dans l'ensemble de l'image de référence et/ou la netteté des bords décelés dans des régions d'image individuelles de l'image (B) et de l'image de référence,
- l'homogénéité dans des régions d'image individuelles de l'image (B) et de l'image de référence, et/ou
- les informations de couleur moyennées sur des zones d'image individuelles de l'image (B) et de l'image de référence.

5. Procédé selon l'une des revendications précédentes, **caractérisé en ce que** l'image de référence est basée sur des informations d'image moyennées des prises qui ont été prises par la pluralité de véhicules à partir de la même scène statique dans des conditions de prise identiques ou similaires.

6. Procédé selon l'une des revendications 3 à 5, **caractérisé en ce qu'**un nombre plus faible de bords décelés dans des zones d'image individuelles de l'image (B), dépassant la mesure de tolérance prédéfinie, par rapport au nombre de bords décelés dans les zones d'image correspondantes de l'image de référence, est interprété comme un indice du blocage optique de la caméra.

7. Procédé selon l'une des revendications 3 à 6, **caractérisé en ce qu'**une plus grande homogénéité de l'ensemble de l'image (B), dépassant la mesure de tolérance prédéfinie, par rapport à l'homogénéité de l'ensemble de l'image de référence est interprétée comme un indice du blocage optique de la caméra.

8. Procédé selon l'une des revendications précédentes, **caractérisé en ce que** l'image (B) prise est transmise au serveur externe au véhicule (2) et est ajoutée aux prises qui ont été prises par la pluralité de véhicules à partir de la même scène statique dans des conditions de prise identiques ou similaires.

9. Procédé selon l'une des revendications précédentes, **caractérisé en ce que,** en présence d'un indice du blocage optique de la caméra, un procédé alternatif pour la détection du blocage optique de la caméra du véhicule (1) est en outre mis en oeuvre par la suite.

10. Procédé permettant de faire fonctionner un véhicule (1) qui est réalisé pour la mise en oeuvre d'un fonctionnement de conduite automatisé, dans lequel un procédé selon l'une des revendications précédentes est mis en oeuvre et, en présence d'un indice de blocage optique d'une caméra du véhicule (1), un degré d'automatisation du fonctionnement de conduite est réduit ou une tâche de conduite est transmise à un conducteur de véhicule du véhicule (1).
